# EUROPEAN PATENT SPECIFICATION

(11) **EP 3 530 125 B1**
(45) Date of publication and mention of the grant of the patent: **14.07.2021**
(21) Application number: 19157962.2
(22) Date of filing: 19.02.2019
(51) Int. Cl.: A23L 2/02, A23L 19/00, A23L 23/00

(54) **METHOD OF PROCESSING TOMATO**
VERFAHREN ZUR VERARBEITUNG VON TOMATEN
PROCÉDÉ POUR TRAITER DES TOMATES

(30) Priority: 27.02.2018 IT 201800003068
(43) Date of publication of application: 28.08.2019
(73) Proprietor: Agrinatura Società Agricola S.r.l., 76123 Andria (BT) (IT)
(72) Inventor: CECI, Giancarlo, 76123 ANDRIA (BT) (IT)
(74) Representative: Biesse S.r.l.

(56) References cited:
- WO-A1-2008/098822
- US-A- 3 172 770
- US-A1- 2003 224 100
- US-A1- 2010 196 563
- HAYES W A ET AL: "THE PRODUCTION AND QUALITY OF TOMATO CONCENTRATES", CRITICAL REVIEWS IN FOOD SCIENCE AND NUTRI, TAYLOR & FRANCIS, USA, vol. 38, no. 7, 1 January 1998 (1998-01-01), pages 537-564, XP008059964, ISSN: 1040-8398, DOI: 10.1080/10408699891274309
- Senem Kamiloglu: "The effect of food processing on bioavailability of tomato antioxidants", , 1 January 2013 (2013-01-01), XP055507637, Retrieved from the Internet: URL:https://content.iospress.com/download/ journal-of-berry-research/jbr051?id=journa l-of-berry-research/jbr051 [retrieved on 2018-09-18]
- B.R. Thakur: "Quality attributes of processed tomato products: a review", , 1 January 1996 (1996-01-01), XP055507636, Retrieved from the Internet: URL:http://ucanr.edu/datastoreFiles/608-11 72.pdf [retrieved on 2018-09-18]

## Description

### Field of the Invention

In its most general aspect, the present invention concerns a method of processing tomatoes, and in particular the invention concerns a method of the aforesaid type for producing a tomato puree (passata di pomodoro).

### State of the art

As known, the known art provides several products obtained by processing tomatoes, such as peeled tomatoes, tomato pulp, canned tomatoes, tomato-based sauces, tomato puree, tomato paste, tomato juice.

Often, the belonging of the aforesaid products to a category or class of goods rather than to another is determined by specific legal requirements, but more generally speaking, for the consumer, the differences essentially lie in the organoleptic characteristics.

In particular, in the field of tomato puree, velvety or rustic, the known art provides processing methods in which the tomato is cold-crushed, therefore heated through the passage in tubes heated at a temperature greater than 100°C, subsequently the tomato is "strained" to eliminate peels and seeds, therefore concentrated under vacuum, and finally packaged, for example jarred, and pasteurized.

Temperatures greater than 100°C are used in these methods to neutralize particular fruit enzymes that are able to degrade the pectins, which in turn are polysaccharides that are found in abundant amounts in the tomato peel and whose presence influences the viscosity of the product obtained by processing the tomato itself, particularly increasing it with the increase of the pectin content.

In other words, the high temperatures used in the methods provided in the known art preserve the pectins and lead to a Brix product value (soluble solid contents), subsequently to the concentration, of about 6 - 6.5.

Although advantageous, the methods of the aforesaid type are not however exempt from drawbacks, among which the main one lies in the negative effects that high temperatures have on various other compounds present in the tomato.

In fact, many compounds with appreciable nutritional and aromatic properties are degraded and irretrievably lost with high temperatures.

Moreover, the methods of the type considered allow to obtain appreciable, visibly adequate, viscosity of the final product, also in view of high water content to the detriment of the pulp content.

Furthermore, in the methods of the known type, it is normal to add citric acid and/or other acidifying agents of the known type to the tomato processed, in order to flavor and/or preserve the final product.

Document WO 2008/098822 discloses a process for the manufacturing of a processed tomato product, comprising the steps of: a) providing tomatoes from plants from a determinate tomato variety; b) comminuting said tomatoes; c) optionally performing a breaking step on the comminuted tomatoes; d) optionally concentrating at least part of the product resulting from step b) or c); e) optionally adding additional ingredients to the product resulting from any of steps b) to d); f) packaging the product resulting from any of the steps b) to e); g) performing a preservation step to the product, wherein the plants are cultured using a structure that protects the tomato plants from rain.

### Summary of the Invention

Object of the present invention is to provide a food product obtained by processing tomatoes, having characteristics so that to overcome the aforesaid drawbacks with reference to the known art.

According to the invention, the aforesaid object is achieved by a method of processing tomatoes, comprising:
- a) providing a preset quantity of fresh tomatoes;
- b) crushing the fresh tomatoes to achieve a first product based on crushed tomato;
- c) concentrating the aforesaid first product based on crushed tomato at a temperature below 95°C and a pressure lower than 1 Bar (100000Pa) to achieve a second product based on concentrated tomato juice, wherein the aforesaid second product has a Brix value of more than 7;
- d) separating the peels and seeds from the aforesaid second product based on concentrated tomato juice to achieve a third product based on tomato puree;
- e) packaging the aforesaid third product based on tomato puree in closed containers;
- f) pasteurizing the aforesaid third product based on tomato puree contained in said closed containers.

Preferably, the aforesaid second product based on concentrated tomato juice has a Brix value of about 8.

Preferably, in the aforesaid step c), the concentration of the aforesaid first product based on crushed tomato is achieved at a temperature below 80°C, more preferably at a temperature below 70°C, still more preferably at a temperature between 50°C and 65°C, and still more preferably at a temperature of about 60°C.

Preferably, in the aforesaid step c), the concentration of the aforesaid first product based on crushed tomato is achieved at a pressure between 0.70 Bars and 0.90 Bars, more preferably at a pressure between 0.75 Bars and 0.85 Bars, still more preferably at a pressure equal to about 0.80 Bars.

Preferably, in the aforesaid step b), the crushing of the aforesaid fresh tomatoes is achieved at room temperature.

Preferably, in the aforesaid step f), the pasteurization of the aforesaid third product based on tomato puree is achieved at a temperature equal to or lower than 85°C, for a duration equal to or less than 25 minutes.

Preferably, in the aforesaid step e), the packaging of the aforesaid third product based on tomato puree is achieved at a temperature between 55°C and 75°C, more preferably at a temperature between 60°C and 70°C.

Preferably, in the aforesaid step b) the fresh tomatoes are crushed within 48 hours from the harvest thereof, more preferably within 36 hours, still more preferably within 24 hours.

Preferably, in the aforesaid step d), the aforesaid second product based on concentrated tomato juice is separated from the peels and seeds by means of sieves with meshes equal to or less than 3.5 mm, preferably in sieves with meshes between 1 mm and 3 mm.

Preferably, in the aforesaid method no citric acid is added and no other acidifying agents are added to the tomato being processed, likewise no citric acid or other acidifying agents are added to the final product based on tomato obtained by the aforesaid method, the aforesaid product preferably having acidity corresponding to the natural acidity of the tomato.

The aforesaid natural acidity of the tomato, which is selected and transformed within a few hours from harvest, is sufficient to ensure a pH level lower than 4.5, a limit that allows to stay safe from the "botulinum" risk.

According to the invention, a product based on tomato is therefore achieved, to be consumed as a seasoning or drink, neat or with other ingredients, which, with the same viscosity as that of similar food products based on tomato provided in the known art, contains more tomato pulp and less water and results, therefore, more appealing to the consumer.

The product based on tomato achieved through the method according to the present invention further provides other improved organoleptic properties compared to similar products based on tomato provided in the known art, resulting more flavored and with a more vivid color, in addition to more natural, being devoid of citric acid or other added acidifying agents.

In fact, the method according to the present invention provides steps of processing tomatoes that never exceed 100°C, that preferably never exceed 90°C, that more preferably never exceed 85°C, and wherein the tomato is also "strained" subsequently to the concentration step occurring at a reduced temperature, unlike in the known art in which the tomato is first heated at high temperatures, then "strained" and then concentrated.

Further characteristics and advantages of the invention will become clearer upon consideration of the following detailed description of some preferred, but not exclusive, embodiments illustrated by way of example and without limitations.

### Detailed description of the invention

The present invention concerns a method of processing tomatoes, which comprises the steps of:
- a) providing a preset quantity of fresh tomatoes;
- b) crushing the fresh tomatoes to achieve a first product based on crushed tomato;
- c) concentrating the first product based on crushed tomato at a temperature below 95°C and a pressure lower than 1 Bar (100000Pa) to achieve a second product based on concentrated tomato juice having a Brix value of more than 7;
- d) separating the peels and seeds from the second product based on concentrated tomato juice to achieve a third product based on tomato puree;
- e) packaging the third product based on tomato puree in closed containers;
- f) pasteurizing the third product based on tomato puree contained in the closed containers.

According to the invention, in step c), the concentration of the first product based on crushed tomato is achieved at a temperature below 80°C, preferably at a temperature below 70°C, more preferably at a temperature between 50°C and 65°C, still more preferably at a temperature of about 60°.

According to the invention, in step c), the concentration of the first product based on crushed tomato is achieved at a pressure between 0.70 Bars and 0.90 Bars, preferably at a pressure between 0.75 Bars and 0.85 Bars, still more preferably at a pressure equal to about 0.80 Bars.

In particular, the concentration is carried out in so-called "concentration bubbles," which, in practice, consist in containers in which a pressure lower than the atmospheric pressure is achieved.

Consequently, the second product based on concentrated tomato juice achieved by the concentration step c) has a Brix value preferably equal to about 8.

This is due to the low temperatures at which the tomato is processed in the present method, particularly in the concentration step, and in the succession of steps of the same method.

As far as the temperatures are concerned, it should be noted that also the step e) of packaging the third product based on tomato puree is achieved at reduced temperature, between 55°C and 75°C and preferably between 60°C and 70°C, like the step f) of pasteurizing the third product based on tomato puree, which is carried out at a temperature equal to or below 85°C, for a duration equal to or less than 25 minutes.

Still, it should be noted that in step b) the tomato is preferably crushed, healthy and fresh, at room temperature, in other words within 48 hours from harvest, preferably within 36 hours from harvest and more preferably within 24 hours from the harvest of the same tomato.

As far as the step d) in which the tomato is "strained" is concerned, in other words separated from peels and seeds, it should be noted that sieves with meshes equal to or less than 3.5 mm, preferably sieves with meshes between 1 mm and 3 mm in size, are used in consideration of the desired granulometry, finer for a so-called velvety sauce or coarser for a so-called rustic sauce.

Finally, it should be noted that, according to the invention, in the present method no citric acid is added and no other acidifying agents are added to the tomato being processed, likewise no citric acid or other acidifying agents are added to the final product based on tomato obtained by the present method, the aforesaid product preferably having an acidity corresponding to the natural acidity of the tomato.

The natural acidity of the tomato, which as specified above is selected and transformed within a few hours from harvest, is sufficient to ensure a pH level lower than 4.5, a limit that allows to stay safe from the "botulinum" risk.

A product based on tomato like a puree (passata) is therefore achieved with the present method, which, with the same viscosity as that of similar food products based on tomato provided in the known art, contains more tomato pulp and less water, and in which many thermolabile composites are preserved, therefore resulting very appealing to the consumer by providing a particularly natural and rich flavor, also thanks to the lack of acidifying agents.

In order to meet incidental and specific requirements, several variations and modifications could be made by a field technician to the illustrated and described embodiments of present invention, provided that all are included in the scope of protection of the invention as defined by the following claims.

## Claims

1. Method of processing tomato, comprising:
- a) providing a preset quantity of fresh tomatoes;
- b) crushing the fresh tomatoes to achieve a first product based on crushed tomato;
- c) concentrating said first product based on crushed tomato at a temperature below 95°C and a pressure lower than 1 Bar (100000Pa) to achieve a second product based on concentrated tomato juice, wherein said second product has a Brix value of more than 7;
- d) separating the peels and seeds from said second product based on concentrated tomato juice to achieve a third product based on tomato puree;
- e) packaging said third product based on tomato puree in closed containers;
- f) pasteurizing said third product based on tomato puree contained in said closed containers.

2. Method according to claim 1, wherein said second product based on concentrated tomato juice has a Brix value of about 8.

3. Method according to claim 1 or 2, wherein the concentration of said first product based on crushed tomato is achieved at a temperature below 80°C, preferably a temperature below 70°C, in said step c).

4. Method according to any one of the preceding claims, wherein the concentration of said first product based on crushed tomato is achieved at a temperature between 50°C and 65°C, preferably at a temperature of about 60°C, in said step c).

5. Method according to any one of the preceding claims, wherein the concentration of said first product based on crushed tomato is achieved at a pressure between 0.70 Bars and 0.90 Bars, preferably at a pressure between 0.75 Bars and 0.85 Bars and more preferably at a pressure of about 0.80 Bars, in said step c).

6. Method according to any one of the preceding claims, wherein the crushing of said fresh tomatoes is achieved at room temperature in said step b).

7. Method according to any one of the preceding claims, wherein the pasteurization of said third product based on tomato puree is achieved at a temperature below or equal to 85°C, for a duration of less than or equal to 25 minutes, in said step f).

8. Method according to any one of the preceding claims, wherein the packaging of said third product based on tomato puree is achieved at a temperature between 55°C and 75°C, preferably at a temperature between 60°C and 70°C, in said step e).

9. Method according to any one of the preceding claims, wherein the fresh tomatoes are crushed within 48 hours from being harvested, preferably within 36 hours and more preferably within 24 hours, in said step b).

10. Method according to any one of the preceding claims, wherein said second product based on concentrated tomato juice is separated from the peels and seeds by means of sieves with meshes of less than or equal to 3.5 mm in size, preferably in sieves with meshes between 1 mm and 3 mm in size, in said step d).

11. Method according to any one of the preceding claims, wherein no acidifying agents are added, the tomato-based product achieved through said method not being additivated with acidifying agents added, said tomato-based product having an acidity equal to the natural acidity of the tomato and pH of less than 4.5.

## Patentansprüche

1. Verfahren zur Verarbeitung von Tomaten, umfassend:
a) die Lieferung einer vordefinierten Menge frischer Tomaten;
b) die frischen Tomaten zerkleinern, um ein erstes Produkt zu erhalten, das auf zerkleinerten Tomaten basiert;
c) Konzentrieren des ersten Produkts auf der Basis von zerkleinerter Tomate bei einer Temperatur unter 95 ° C und einem Druck unter 1 bar (100000 PA), um ein zweites Produkt auf der Basis von konzentriertem Tomatensaft zu erhalten, bei dem das zweite Produkt einen Wert ° Brix von mehr als 7 aufweist;
d) Trennen der Schalen und Samen von dem zweiten Produkt auf der Basis von konzentriertem Tomatensaft, um ein drittes Produkt auf der Basis von Tomatenpüree zu erhalten;
e) Verpacken des dritten Tomatenpasteprodukts in geschlossenen Behältern;
f) Pasteurisieren des dritten Produkts auf der Basis von Tomatenpüree, das in den geschlossenen Behältern enthalten ist.

2. Verfahren nach Anspruch 1, wobei das zweite konzentrierte Tomatensaftprodukt einen Brix-Wert von 8° Bx aufweist.

3. Verfahren nach Anspruch 1 oder 2, wobei die Konzentration des ersten zerkleinerten Tomatenprodukts bei einer Temperatur unter 80 °C, vorzugsweise bei einer Temperatur unter 70° C, in dem Schritt c) erreicht wird.

4. Verfahren nach einem vorhergehenden Anspruch, wobei die Konzentration des ersten zerkleinerten Tomatenprodukts bei einer Temperatur zwischen 50 ° C und 65 ° C, vorzugsweise bei einer Temperatur von etwa 60 ° C, in dem Schritt c) erhalten wird.

5. Verfahren nach einem der vorhergehenden Ansprüche, wobei die Konzentration des ersten Produkts auf der Basis von zerkleinerter Tomate bei einem Druck zwischen 0,70 bar und 0,90 bar, vorzugsweise bei einem Druck zwischen 0,75 bar und 0,85 bar erhalten wird. Stangen und bevorzugter bei einem Druck von etwa 0,80 Stangen in dem Schritt c).

6. Verfahren nach einem der vorhergehenden Ansprüche, bei dem das Zerkleinern der frischen Tomaten bei Raumtemperatur in dem Schritt b) durchgeführt wird.

7. Verfahren nach einem der vorhergehenden Ansprüche, wobei die Pasteurisierung des dritten Produkts auf der Basis von Tomatenpüree bei einer Temperatur von weniger als oder gleich 85 ° C für einen Zeitraum von weniger als oder gleich 25 Minuten durchgeführt wird; in besagtem Schritt f).

8. Verfahren nach einem der vorhergehenden Ansprüche, wobei das Verpacken des dritten Produkts auf der Basis von Tomatenpüree bei einer Temperatur zwischen 55 ° C und 75 ° C durchgeführt wird, vorzugsweise bei einer Temperatur zwischen 60 ° C und 70 ° C. C, in besagtem Schritt e).

9. Verfahren nach einem der vorhergehenden Ansprüche, bei dem die frischen Tomaten innerhalb von 48 Stunden nach der Ernte, vorzugsweise innerhalb von 36 Stunden und bevorzugter innerhalb von 24 Stunden, in dem Schritt b) zerkleinert werden.

10. Verfahren nach einem der vorhergehenden Ansprüche, wobei das zweite Produkt auf der Basis von konzentriertem Tomatensaft mittels eines Siebs mit einer Maschenweite von weniger als oder gleich 3,5 mm, vorzugsweise in Maschenweite, von den Schalen und Samen getrennt wird Bildschirme. mit einer Größe zwischen 1 mm und 3 mm in dem Schritt d).

11. Verfahren nach einem der vorhergehenden Ansprüche, bei dem kein Säuerungsmittel zugesetzt wird, das Produkt auf Tomatenbasis, das durch das Verfahren ohne Zusatz von Säuerungsmitteln erhalten wird, wobei das Produkt auf Tomatenbasis eine Säure aufweist, die gleich der natürlichen Säure von ist die Tomate und einen pH-Wert von weniger als 4.5.

## Revendications

1. Procédé de transformation de la tomate, comprenant:
a) la fourniture d'une quantité prédéfinie de tomates fraîches;
b) écraser les tomates fraîches pour obtenir un premier produit à base de tomates concassées;
c) concentrer ledit premier produit à base de tomate concassée à une température inférieure à 95 ° C et une pression inférieure à 1 Bar (100000PA) pour obtenir un deuxième produit à base de jus de tomate concentré, dans lequel ledit deuxième produit a une valeur °Brix supérieure à 7;
d) séparer les pelures et les graines dudit deuxième produit à base de jus de tomate concentré pour obtenir un troisième produit à base de purée de tomate;
e) emballer ledit troisième produit à base de purée de tomates dans des récipients fermés;
f) pasteuriser ledit troisième produit à base de purée de tomate contenue dans lesdits récipients fermés.

2. Procédé selon la revendication 1, dans lequel ledit deuxième produit à base de jus de tomate concentré a une valeur Brix de 8°Bx.

3. Procédé selon la revendication 1 ou 2, dans lequel la concentration dudit premier produit à base de tomate broyée est atteinte température inférieure 80 ° C, de préférence a à une température inférieure à 70 ° C, dans ladite étape c).

4. Procédé selon l'une quelconque des revendications précédentes, dans lequel la concentration dudit premier produit à base de tomate broyée est obtenue à une température comprise entre 50 ° C et 65 ° C, de préférence à une température d'environ 60 ° C, dans ladite étape c).

5. Méthode selon l'une des précédentes revendications, dans lesquelles la concentration dudit premier produit à base de tomate broyée est obtenue à une pression comprise entre 0,70 bar et 0,90 bar, de préférence à une pression comprise entre 0,75 bar et 0,85 bar. Bars et plus préférentiellement à une pression d'environ 0,80 Bars, dans ladite étape c).

6. Procédé selon l'une quelconque des revendications précédentes, dans lequel le broyage desdites tomates fraîches est réalisé à température ambiante dans ladite étape b).

7. Procédé selon l'une quelconque des revendications précédentes, dans lequel la pasteurisation dudit troisième produit à base de purée de tomate est réalisée à une température inférieure ou égale à 85 ° C, pendant une durée inférieure ou égale à 25 minutes, dans ledit étape f).

8. Procédé selon l'une quelconque des revendications précédentes, dans lequel le conditionnement dudit troisième produit à base de purée de tomate est réalisé à une température comprise entre 55 °C et 75 °C, de préférence à une température comprise entre 60 °C et 70 °C, à ladite étape e).

9. Procédé selon l'une quelconque des revendications précédentes, dans lequel les tomates fraîches sont broyées dans les 48 heures après avoir été récoltées, de préférence dans les 36 heures et plus préférentiellement dans les 24 heures, dans ladite étape b).

10. Procédé selon l'une quelconque des revendications précédentes, dans lequel ledit deuxième produit à base de jus de tomate concentré est séparé des pelures et des graines au moyen de tamis à mailles de taille inférieure ou égale à 3,5 mm, de préférence dans des tamis à mailles. d'une taille comprise entre 1 mm et 3 mm, à ladite étape d).

11. Procédé selon l'une quelconque des revendications précédentes, dans lequel aucun agent acidifiant n'est ajouté, le produit à base de tomates obtenu par ledit procédé sans addition d'agents acidifiants, ledit produit à base de tomate ayant une acidité égale à l'acidité naturelle de la tomate et un pH de moins de 4.5.
